# EUROPEAN PATENT APPLICATION

(11) **EP 4 294 110 A1**
(43) Date of publication of application: **20.12.2023**
(21) Application number: 22756531.4
(22) Date of filing: 17.02.2022
(51) Int. Cl.: H04W 76/10, H04W 80/08, H04W 92/12, H04W 92/20, H04W 88/08

(54) **DEVICE AND METHOD FOR CELL INFORMATION AND E2 INTERFACE SETUP IN RADIO ACCESS NETWORK**

(30) Priority: 17.02.2021 KR 20210021489
(71) Applicant: Samsung Electronics Co., Ltd., Suwon-si, Gyeonggi-do 16677 (KR)
(72) Inventor: SONG, Junhyuk, Suwon-si, Gyeonggi-do 16677 (KR); LEE, Chungkeun, Suwon-si, Gyeonggi-do 16677 (KR)
(74) Representative: HGF
(86) International application number: PCT/KR2022/002384
(87) International publication number: WO 2022/177333

(57) **Abstract**

The present disclosure relates to a pre-5^{th}-Generation (5G) or 5G communication system to be provided for supporting higher data rates Beyond 4^{th}-Generation (4G) communication system such as Long Term Evolution (LTE). According to embodiments of the present disclosure, a method performed by an E2 node may include transmitting a request message to each of a plurality of network entities, receiving a plurality of response messages corresponding to the request message, from the plurality of the network entities, transmitting a first message comprising the request message and the plurality of the response messages to a radio access network (RAN) intelligent controller (RIC), and receiving a second message corresponding to the first message, the first message may be an E2 SETUP REQUEST message or an E2 NODE CONFIGURATION UPDATE message, and the second message may be an E2 SETUP RESPONSE message or an E2 NODE CONFIGURATION UPDATE ACKNOWLEDGE message.

## Description

### [Technical Field]

The present disclosure relates to an apparatus and a method for E2 node control by a radio access network (RAN) intelligent controller (RIC) in a radio access network. The present disclosure relates to an apparatus and a method for controlling an E2 node through an E2 message conforming to an open (O)-RAN standard of a wireless communication system.

The present disclosure relates to an apparatus and a method for serving cell and/or neighbor cell information message delivery if E2 setup, configuration update occurs at a base station conforming to an O-RAN standard using an E2 message of a wireless communication system.

### [Background Art]

The 5G system and new radio or next radio (NR) are commercialized to satisfy demand for wireless data traffic, and provide a high data rate service to a user through the 5G system like 4G, and it is also expected that wireless communication services for various purposes such as internet of things and a service requiring high reliability for a specific purpose may be provided. Open radio access network (O-RAN) established by operators and equipment providers in a system where the current 4G communication system and the 5G system are mixed defines a new network element (NE) and an interface standard based on the existing 3rd generation partnership project (3GPP) standard, and suggests an O-RAN structure.

To meet the demand for wireless data traffic having increased since deployment of 4^{th} generation (4G) communication systems, efforts have been made to develop an improved 5^{th} generation (5G) or pre-5G communication system. Therefore, the 5G or pre-5G communication system is also called a `Beyond 4G Network' or a `Post LTE System'.

The 5G communication system is considered to be implemented in higher frequency (mmWave) bands, e.g., 60GHz bands, so as to accomplish higher data rates. To decrease propagation loss of the radio waves and increase the transmission distance, the beamforming, massive multiple-input multiple-output (MIMO), Full Dimensional MIMO (FD-MIMO), array antenna, an analog beam forming, large scale antenna techniques are discussed in 5G communication systems.

In addition, in 5G communication systems, development for system network improvement is under way based on advanced small cells, cloud Radio Access Networks (RANs), ultra-dense networks, device-to-device (D2D) communication, wireless backhaul, moving network, cooperative communication, Coordinated Multi-Points (CoMP), reception-end interference cancellation and the like.

In the 5G system, Hybrid FSK and QAM Modulation (FQAM) and sliding window superposition coding (SWSC) as an advanced coding modulation (ACM), and filter bank multi carrier (FBMC), non-orthogonal multiple access (NOMA), and sparse code multiple access (SCMA) as an advanced access technology have been developed.

### [Disclosure of Invention]

### [Technical Problem]

Based on the discussions described above, the present disclosure provides an apparatus and a method for E2 node control of a radio access network (RAN) intelligent controller (RIC) in a wireless communication system.

Also, the present disclosure provides an apparatus and a method for efficiently transmitting a response message corresponding to a request message from an E2 node to an RIC.

### [Solution to Problem]

As a 4th generation (4G)/5th generation (5G) communication system (hereafter, a 4G/5G system, new radio or next radio (NR)) is commercialized, a virtualized network requires a differentiated service support for users. Open-radio access network (O-RAN) newly defines the existing 3rd generation partnership project (3GPP) network entity (NE), radio unit (RU), digital unit (DU), central unit (CU)-control plane (CP), and CU-user plane (UP) as O-RU, O-DU, O-CU-CP, and O-CU-UP respectively, and additionally standardizes a near-real-time RAN intelligent controller (RIC). Herein, the O-RU, the O-DU, the O-CU-CP, and the O-CU-UP may be understood as entities which build the RAN operating according to the O-RAN standard, and may be referred to as E2 nodes. The near-real-time RIC standardizes a part of the existing RAN functions like some call processing function and a radio resource management function, etc. at a central server.

E2 nodes transmit an E2 SETUP REQUEST message to the RIC for service initialization, and the RIC transmits an E2 SETUP RESPONSE message as a response. Next, the E2 node transmits the call processing function of its supporting RAN to the RIC as a service update message, and the RIC transmits a service update acknowledgement message as a response. Besides, an E2 NODE CONFIGURATION UPDATE procedure is defined, and the E2 node transmits E2 NODE setup information to the RIC. Next, the RIC generates an E2 subscription request message, sets a call processing EVENT by transmitting it to the E2 node (e.g., the O-CU-CP, the O-CU-UP, the O-DU), and transmits a subscription request response message transmitted by the E2 node to the RIC after the EVENT setup.

In this case, the near-real-time RIC requires various RAN configuration information such as cell information (e.g., serving cell information and neighbor cell information), globally unique access and mobility management (AMF) ID (GUAMI) information, support public land mobile network (PLMN) information, and slice information at the same time as the service initiation from the E2 setup, to perform some call processing function and a radio resource management (RRM) function.

To address the above-stated problems, embodiments of the present disclosure provide an apparatus and a method for transmitting various E2 node response messages to an RIC, by supplementing an E2 SETUP message and an E2 COFNIGURATION UPDATE message between the RIC and the E2 node (e.g., the O-CU-UP).

Embodiments of the present disclosure suggest a scheme for transmitting an NG SETUP REQUEST message for delivering core network related information and a plurality of its associated NG SETUP RESPONSE messages from the E2 node to the RIC through the E2 SETUP message, in the E2 SETUP step.

Embodiments of the present disclosure suggest a scheme for transmitting an RAN CONFIGURATION UPDATE message and a plurality of its associated RAN CONFIGURATION UPDATE ACKNOWLEDGE messages from the E2 node to the RIC through the E2 CONFIGURATION UPDATE message, in the E2 CONFIGURATION UPDATE step.

Embodiments of the present disclosure suggest a scheme for transmitting an SlAP SETUP REQUEST message and a plurality of its associated SlAP SETUP RESPONSE messages from the E2 node to the RIC through the E2 SETUP message, in the E2 SETUP step between the RIC and the E2 NODE (e.g., an O-eNB).

Embodiments of the present disclosure suggest a scheme for transmitting an ENB CONFIGURATION UPDATE message and a plurality of its associated ENB CONFIGURATION UPDATE ACKNOWLEDGE messages from the E2 node to the RIC through the E2 CONFIGURATION UPDATE message, in the E2 CONFIGURATION UPDATE step between the RIC and the E2 NODE (e.g., an O-eNB).

Embodiments of the present disclosure suggest a scheme for transmitting an XN SETUP REQUEST message and a plurality of its associated XN SETUP RESPONSE messages from the E2 node to the RIC through the E2 SETUP message or the E2 NODE CONFIGURATION UPDATE message, in the E2 SETUP step or the E2 CONFIGURATION UPDATE step between the RIC and the E2 node (O-CU-CP).

Embodiments of the present disclosure suggest a scheme for transmitting an X2 SETUP REQUEST message and a plurality of its associated X2 SETUP RESPONSE messages from the E2 node to the RIC through the E2 SETUP message or the E2 NODE CONFIGURATION UPDATE message, in the E2 SETUP step or the E2 CONFIGURATION UPDATE step between the RIC and the E2 node (O-eNB).

Embodiments of the present disclosure relate to an E2 SETUP/E2 CONFIGURATION message for delivering the above-stated information. According to embodiments of the present disclosure, a method performed by an E2 node may include transmitting a request message to each of a plurality of network entities, receiving a plurality of response messages corresponding to the request message, from the plurality of the network entities, transmitting a first message comprising the request message and the plurality of the response messages to an RIC, and receiving a second response message corresponding to the first message, the first message may be an E2 SETUP REQUEST message or an E2 NODE CONFIGURATION UPDATE message, and the second message may be an E2 SETUP RESPONSE message or an E2 NODE CONFIGURATION UPDATE ACKNOWLEDGE message.

The present disclosure for addressing the above problems includes, in a method of a first node of a wireless communication system, at least one of a step for transmitting an NG/S1 SETUP REQUEST message delivering core network related information and a plurality of associated NG/S 1 SETUP RESPONSE messages in an E2 SETUP message in a step in which an E2 node generates an E2 SETUP REQUEST message, a step in which the E2 node transmits the E2 SETUP message, and an X2/XN SETUP REQUEST message and a plurality of associated X2/XN SETUP RESPONSE messages in an E2 SETUP message or an E2 NODE CONFIGURATION UPDATE message in an E2 CONFIGURATION UPDATE step, and a step of transmitting the E2 SETUP message between the RIC and the E2 node (O-CU-CP), and at an AMF/MME an AMF/MME CONFIGURATION UPDATE message and a plurality of associated AMF/MME CONFIGURATION UPDATE ACKNOWLEDGE messages in the E2 SETUP message or the E2 NODE CONFIGURATION UPDATE message in the E2 CONFIGURATION UPDATE step.

In an embodiment of the present disclosure, a method performed by an E2 node, the method comprising: receiving, from a network entity, request message; transmitting, to the network entity, a response message; transmitting, to near-real time (RT) radio access network (RAN) intelligent controller (RIC), first message including E2 node component configuration; and receiving, from the near-RT RIC, second message corresponding to the first message, wherein the E2 node component configuration includes a request part corresponding to the request message and a response part corresponding to the response message, and wherein, in case of NG interface, the request part includes access and mobility management function (AMF) configuration update message and the response part includes AMF configuration update acknowledge message.

In an embodiment of the present disclosure, a method performed by a near-real time (RT) radio access network (RAN) intelligent controller (RIC), the method comprising: receiving, from an E2 node, first message including E2 node component configuration; and transmitting, to the E2 node, second message corresponding to the first message, wherein the E2 node component configuration includes a request part corresponding to the request message from the network entity to the E2 node and a response part corresponding to the response message from the E2 node to the network entity, and wherein, in case of NG interface, the request part includes access and mobility management function (AMF) configuration update message and the response part includes AMF configuration update acknowledge message.

In an embodiment of the present disclosure, an apparatus for an E2 node, the apparatus comprising: at least one processor, at least one transceiver coupled with the at least one processor, wherein the at least one processor is configured to receive, from a network entity, request message; transmit, to the network entity, a response message; transmit, to near-real time (RT) radio access network (RAN) intelligent controller (RIC), first message including E2 node component configuration; and receive, from the near-RT RIC, second message corresponding to the first message, wherein the E2 node component configuration includes a request part corresponding to the request message and a response part corresponding to the response message, and wherein, in case of NG interface, the request part includes access and mobility management function (AMF) configuration update message and the response part includes AMF configuration update acknowledge message.

In an embodiment of the present disclosure, an apparatus for a near-real time (RT) radio access network (RAN) intelligent controller (RIC), the apparatus comprising: at least one processor, at least one transceiver coupled with the at least one processor, wherein the at least one processor is configured to receive, from an E2 node, first message including E2 node component configuration; and transmit, to the E2 node, second message corresponding to the first message, wherein the E2 node component configuration includes a request part corresponding to the request message from the network entity to the E2 node and a response part corresponding to the response message from the E2 node to the network entity, and wherein, in case of NG interface, the request part includes access and mobility management function (AMF) configuration update message and the response part includes AMF configuration update acknowledge message.

### [Advantageous Effects of Invention]

An apparatus and a method according to various embodiments of the present disclosure, may enable a radio access network (RAN) intelligent controller (RIC) to control an E2 node.

Effects obtainable from the present disclosure are not limited to the above-mentioned effects, and other effects which are not mentioned may be clearly understood by those skilled in the art of the present disclosure through the following descriptions.

### [Brief Description of Drawings]

FIG. 1 illustrates an example of a 4th generation (4G) long term evolution (LTE) core system according to embodiments of the present disclosure.
FIG. 2A illustrates an example of a 5th generation (5G) non-standalone (NSA) system according to embodiments of the present disclosure.
FIG. 2B illustrates an example of architecture for open (O)-radio access network (RAN) according to embodiments of the present disclosure.
FIG. 3 illustrates a protocol stack of an E2 application protocol message in a radio access network according to embodiments of the present disclosure.
FIG. 4 illustrates an example of a connection between a base station and a RAN intelligence controller (RIC) in a radio access network according to embodiments of the present disclosure.
FIG. 5 illustrates a configuration of a device in a radio access network according to embodiments of the present disclosure.
FIG. 6 illustrates logical functions related to E2 messages of an E2 node and an RIC in a radio access network according to embodiments of the present disclosure.
FIG. 7 illustrates an example of a signaling procedure between an E2 node and an RIC according to embodiments of the present disclosure.
FIG. 8 illustrates an example of a setup procedure between an E2 node and an RIC according to embodiments of the present disclosure.
FIG. 9 illustrates an example of an E2 NODE COFNIGURATION UPDATE procedure between an E2 node and an RIC according to embodiments of the present disclosure.
FIG. 10 illustrates an example of signaling between an E2 node, network nodes, and an RIC according to embodiments of the present disclosure.
FIG. 11 illustrates an example of a COFNIGURATION UPDATE procedure between a core network entity and an RIC according to embodiments of the present disclosure.
FIG. 12 is a diagram summarizing a request part and a message part between an E2 node and an RIC according to embodiments of the present disclosure.
FIGS. 13A through 13C illustrate information element (IE) examples of an E2 SETUP message.

### [Best Mode for Carrying out the Invention]

Terms used in the present disclosure are used merely to describe specific embodiments, and may not intend to limit the scope of other embodiments. Singular expressions may include plural expressions unless the context clearly indicates otherwise. Terms used herein, including technical or scientific terms, may have the same meaning as those commonly understood by a person of ordinary skill in the technical field described in the present disclosure. Among the terms used in the present disclosure, terms defined in a general dictionary may be interpreted as having the same or similar meanings as those in the context of the related art, and unless explicitly defined in the present disclosure, may not be interpreted as ideal or excessively formal meanings. In some cases, even terms defined in the present disclosure may not be interpreted to exclude embodiments of the present disclosure.

A hardware-based approach will be described as an example in various embodiments of the present disclosure to be described hereafter. However, various embodiments of the present disclosure include technology which uses both hardware and software, and accordingly various embodiments of the present disclosure do not exclude a software-based approach.

Hereafter, the present disclosure relates to an apparatus and a method for performing a subscription procedure between a device in a radio access network (RAN) and a device for controlling the RAN in a wireless communication system.

Terms for signals, terms indicating channels, terms indicating control information, terms indicating network entities, and terms indicating components of a device used in the following explanation are illustrated for convenience of description. Accordingly, the present disclosure is not limited to the terms to be described, and other terms having the same technical meaning may be used.

In addition, the present disclosure describes various embodiments using terms used in some communication standard (e.g., 3rd generation partnership project (3GPP)), but this is only an example for description. Various embodiments of the present disclosure may be easily modified and applied in other communication systems.

Hereafter, an uplink indicates a radio link for transmitting data or a control signal from a user equipment (UE) or a mobile station (MS) to an eNode B or a base station (BS), and a downlink indicates a radio link for transmitting data or a control signal from the eNode B to the UE in the present disclosure. Also, the eNode B is an entity of performing resource allocation of the UE, and may be at least one of an eNode B, a Node B, a BS, a generation node B (gNB) radio access unit, a BS controller, or a node on the network. The UE may include a UE, an MS, a cellular phone, a smart phone, a computer, or a multimedia system for performing a communication function.

A 5^{th} generation (5G) communication system (hereafter, may be used interchangeably with a 5G system, new radio or next radio (NR)) is commercialized to satisfy demand for wireless data traffic, and provide a high data rate service to users through the 5G system like 4G, and it is also expected that wireless communication services for various purposes such as a service requiring high reliability may be provided for internet of things and specific purposes.

Terms for signals, terms indicating channels, terms indicating control information, terms indicating network entities, and terms indicating components of a device used in the following explanation are illustrated for convenience of description. Accordingly, the present disclosure is not limited to the terms to be described, and other terms having the same technical meaning may be used.

Also, in the present disclosure, to determine whether a specific condition is satisfied or fulfilled, expressions such as greater than or less than are used but are merely an expression by way of example and do not exclude expressions of equal to or greater than or equal to or less than. A condition expressed as `greater than or equal to' may be replaced by `greater than', a condition expressed as `less than or equal to' may be replaced by `less than', and a condition expressed as `greater than or equal to and less than' may be replaced by `greater than and less than or equal to'.

In addition, the present disclosure describes various embodiments using terms used in some communication standard (e.g., 3GPP), but this is only an example for description. Various embodiments of the present disclosure may be easily modified and applied in other communication systems.

Open-RAN (O-RAN) established by operators and equipment providers in a system where the current 4G communication system and the 5G system are mixed defines a new network element (NE) and an interface standard based on the existing 3GPP standard, and thus presents an O-RAN structure. The O-RAN newly defines the existing 3GPP network entity (NE), radio unit (RU), distributed unit (DU), central unit (CU)-control plane (CP), and CU-user plane (UP) as O-RU, O-DU, O-CU-CP, and O-CU-UP respectively, and besides, the O-RAN standardized a near-real-time RAN intelligent controller (RIC) and a non-real-time (NRT) RIC. The RIC intensively deploys a server at one physical place, and is a logical node for collecting information on a cell site transmitted and received by the UE and the O-DU, the O-CU-CP or the O-CU-UP. The O-DU and the RIC, the O-CU-CP and the RIC, and the O-CU-UP and the RIC may be connected via Ethernet. For doing so, interface standards for communications between the O-DU and the RIC, between the O-CU-CP and the RIC, and between the O-CU-UP and the RIC are required, and message formats such as E2-DU, E2-CU-CP, E2-CU-UP requires procedure definitions between the O-DU, the O-CU-CP, the O-CU-UP and the RIC. In particular, differentiated service support is required for users in a virtualized network, and it is necessary to define functions of the messages of E2-DU, E2-CU-CP and E2-CU-UP to support a service for wide cell coverage, by concentrating a call processing message/function generating in the O-RAN on the RIC.

Specifically, the RIC may generate and transmit an E2 subscription message to the O-DU, the O-CU-CP, or the O-CU-UP and thus set an event occurrence condition. The O-DU, the O-CU-CP, or the O-CU-UP may determine that the set condition is satisfied, load a 3GPP call processing message corresponding to the satisfied condition in a container to the RIC, classify into a user identifier, a cell identifier, a network slice identifier and so on, and then transmit through an E2 indication/report.

Call processing message information collected in the O-RAN based on the user identifier may be identified that the RIC is for a specific user/specific cell/specific network slice per I/F. The collected information may be transmitted from at least one of the (O-)CU-CP, the (O-)CU-UP, and the (O-)DU. The RIC may identify based on the user identifier that information collected from different entities is related to one specific user/specific cell/specific network slice, provide a specialized service for the specific user/specific cell/specific network slice with respect to a plurality of cells/network slices based on the collected information, and determine a key performance indicator (KPI) of a service provided to each user.

Since a general call processing service is restricted to a base station basis, the number of supportable cells is limited. In addition, since the collected information is limited to a specific base station, efficient monitoring on radio resources for the whole was not possible. According to various embodiments of the present disclosure, the RIC may collect one or more call processing messages (e.g., E1, F1, X2, XN, RRC, etc.) per I/F, generated by the O-RU, the O-DU, the O-CU-CP or the O-CU-UP, and thus efficiently provide resource optimization and a user specific service or a user requested service with respect to the specific user/specific cell/specific network slices for wide cells. For example, the RIC may configure an additional carrier by efficiently dividing the network slice or by serving a specific terminal through carrier aggregation for the resource optimization, or configure an additional cell for performing dual access to serve a specific terminal through dual connectivity (DC). In addition, the RIC may configure a specific terminal to avoid connection with a specific cell and to connect with a specific cell in inter-cell movement. In addition, the RIC may efficiently perform the resource optimization through machine learning through analysis based on the collected information. In addition, the resource optimization of the present disclosure is not limited to the described content. Also, according to the present disclosure, it is possible not only to collect information per terminal but also to collect and analyze information per bearer.

The collected information of the specific user may be used at the collection server, the RIC or the NRT-RIC but may be also provided to an operations support system (OSS) or/and a business support system (BSS) to provide the specialized service to the user.

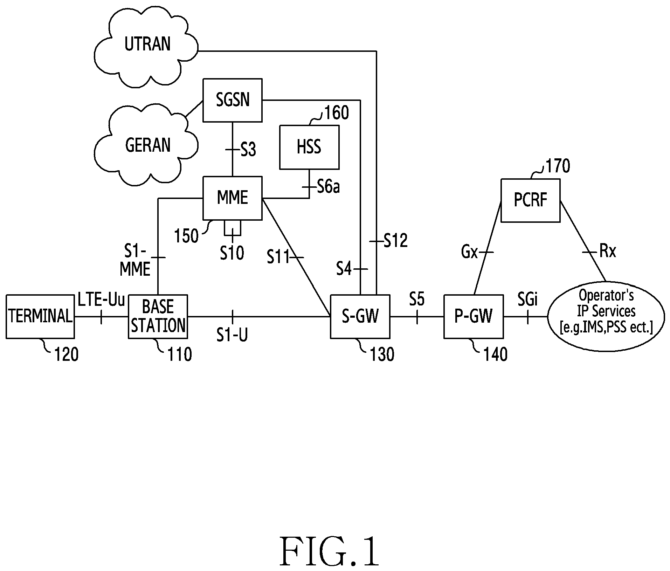

FIG. 1 illustrates an example of a 4th generation (4G) long term evolution (LTE) core system.

Referring to FIG. 1, the LTE core system includes a base station 110, a terminal 120, a serving gateway (S-GW) 130, a packet data network gateway (P-GW) 140, a mobility management entity (MME) 150, a home subscriber server (HSS) 160, and a policy and charging rule function (PCRF) 170.

The base station 110 is a network infrastructure for providing radio access to the terminal 120. For example, the base station 110 is a device which performs scheduling by collecting status information such as a buffer status, an available transmission power, and a channel status of the terminal 110. The base station 110 has coverage defined as a specific geographic region based on a signal transmission distance. The base station 110 is connected to the MME 150 through an S1-MME interface. Besides the base station, the base station 110 may be referred to as an `access point (AP)', an `eNodeB (eNB)', a `wireless point', and a 'transmission/reception point (TRP)' or other term having the equivalent technical meaning.

The terminal 120 is a device used by the user, and performs communication with the base station 110 over a radio channel. In some cases, the terminal 120 may be operated without user's involvement. That is, at least one of the terminal 120 and the terminal 130 is a device which performs machine type communication (MTC), and may not be carried by the user. Besides the terminal, the terminal 120 may be referred to as a `UE', a `mobile station', a `subscriber station', a `customer-premises equipment (CPE)', a `remote terminal', a `wireless terminal', or a `user device', or other term having the equivalent technical meaning.

The S-GW 130 provides a data bearer, and generates or controls the data bearer under control of the MME 150. For example, the S-GW 130 processes a packet arriving from the base station 110 or a packet to be forwarded to the base station 110. In addition, the S-GW 130 may perform an anchoring role in handover of the terminal 120 between base stations. The P-GW 140 may function as a connection point to an external network (e.g., an internet network). In addition, the P-GW 140 allocates an internet protocol (IP) address to the terminal 120, and serves as an anchor for the S-GW 130. In addition, the P-GW 140 may apply quality of service (QoS) policy of the terminal 120, and manage account data.

The MME 150 manages mobility of the terminal 120. In addition, the MME 150 may perform authentication, bearer management, and the like on the terminal 120. That is, the MME 150 is responsible for mobility management and various control functions of the terminal. The MME 150 may interwork with a serving general packet radio service (GPRS) support node (SGSN).

The HSS 160 stores key information and a subscriber profile for the authentication of the terminal 120. The key information and the subscriber profile are transmitted from the HSS 160 to the MME 150 if the terminal 120 accesses the network.

The PCRF 170 defines a policy and a charging rule. The stored information is transmitted from the PCRF 180 to the P-GW 140, and the P-GW 140 may control the terminal 120 (e.g., QoS management, charging, etc.) based on the information provided from the PCRF 180.

Carrier aggregation (hereafter, `CA') technology is a technology which combines a plurality of component carriers, and transmits and receives at one terminal a signal using the plurality of the component carriers at the same time and thus increases frequency use efficiency in terms of the terminal or the base station. Specifically, according to the CA technology, the terminal and the base station may transmit and receive signals using a broadband using the plurality of the component carriers in the uplink (UL) and the downlink (DL), wherein the component carriers are located in different frequency bands respectively. Hereafter, the UL indicates a communication link through which the terminal transmits a signal to the base station, and the DL indicates a communication link through which the base station transmits a signal to the terminal. At this time, the numbers of uplink component carriers and downlink component carriers may be different.

Dual connectivity or multi connectivity is a technology for increasing the frequency use efficiency in terms of the terminal or the base station, in which one terminal is connected to a plurality of different base stations and transmits and receives signals simultaneously using carriers within the plurality of the base stations positioned in different frequency bands. The terminal may be connected to a first base station (e.g., a base station which provides services using the LTE technology or the 4G mobile communication technology) and a second base station (e.g., a base station which provides services using the NR technology or 5G mobile communication technology) at the same time to transmit and receive traffic. In this case, frequency resources used by each base station may be positioned in different bands. As such, the operation scheme based on the dual connectivity scheme of the LTE and the NR may be referred to as 5G non-standalone (NSA).

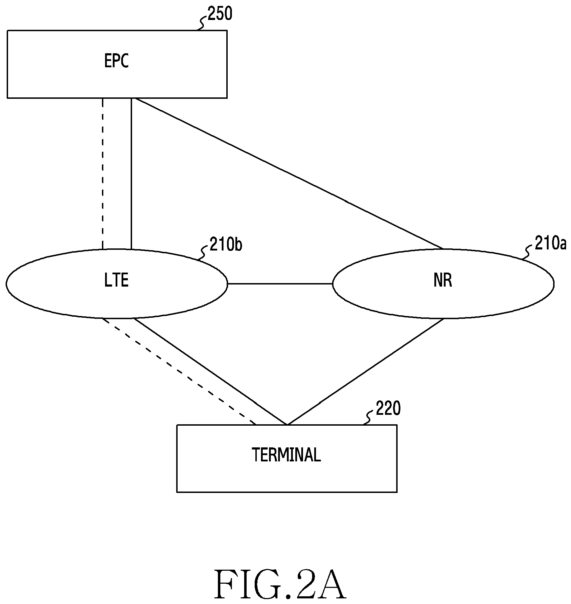

FIG. 2A illustrates an example of a 5G NSA system.

Referring to FIG. 2A, the 5G NSA system includes an NR RAN 210a, an LTE RAN 210b, a terminal 220, and an evolved packet core network (EPC) 250. The NR RAN 210a and the LTE RAN 210b are connected to the EPC 150, and the terminal 220 may be served by any one or both of the NR RAN 210a and the LTE RAN 210b at the same time. The NR RAN 210a includes at least one NR base station, and the LTE RAN 210b includes at least one LTE base station. Herein, the NR base station may be referred to as a '5G node', a `next generation nodeB (gNB)' or other term having the equivalent technical meaning. In addition, the NR base station may have a structure divided into a CU and a DU, and the CU may also have a structure divided into a CU-CP unit and a CU-UP unit.

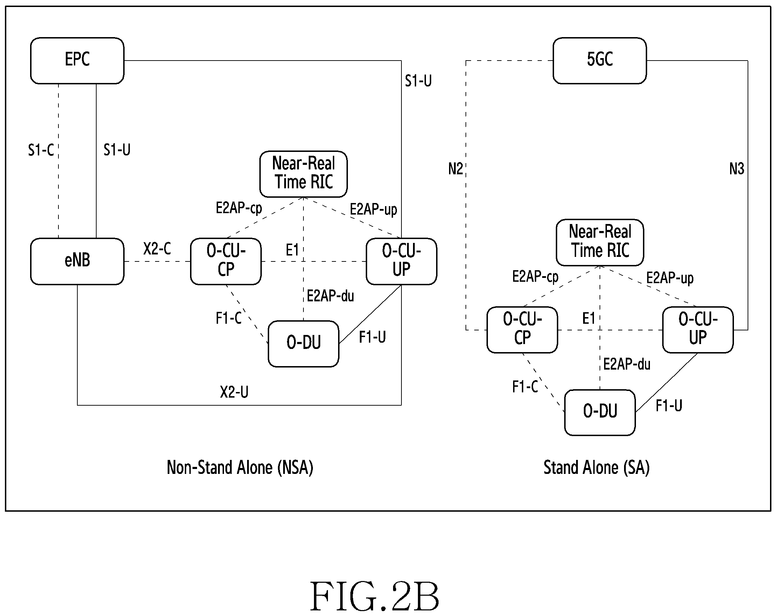

In the structure shown in FIG. 2, the terminal 220 may perform radio resource control (RRC) access through the first base station (e.g., a base station belonging to the LTE RAN 210b), and may be served with functions (e.g., connection management, mobility management, etc.) provided in the control plane. In addition, the terminal 220 may receive additional radio resources for transmitting and receiving data via a second base station (e.g., a base station belonging to the NR RAN 210a). This dual connectivity technology using the LTE and the NR may be referred to as evolved universal terrestrial radio access (E-UTRA)-NR (EN) - dual connectivity (DC). Similarly, the dual connectivity technology in which the first base station uses the NR technology and the second base station uses the LTE technology is referred to as NR-E-UTRA (NE) - DC. In addition, various embodiments may be applied to the multi connectivity and the CA technology of various types. In addition, various embodiments may be applicable even if a first system using a first communication technology and a second system using a second communication technology are implemented in one device or if the first base station and the second base station are located at the same geographic location.

FIG. 2B shows an architecture example for the O-RAN. For the sake of E2-SM-KPI monitoring (KPIMON) of an E2 service model, an O-RAN non-stand alone in the multi-connectivity operation using the E-UTRA and the NR radio access technology is considered, whereas the E2 node may be assumed to be in an O-RAN stand alone mode.

Referring to FIG. 2B, in deployment of the O-RAN non-standalone mode, the eNB is connected with the EPC through an S1-C/S1-U interface, and is connected with the O-CU-CP through an X2 interface. The O-CU-CP for the deployment of the O-RAN standalone mode may be connected with a 5G core (5GC) through an N2/N3 interface.

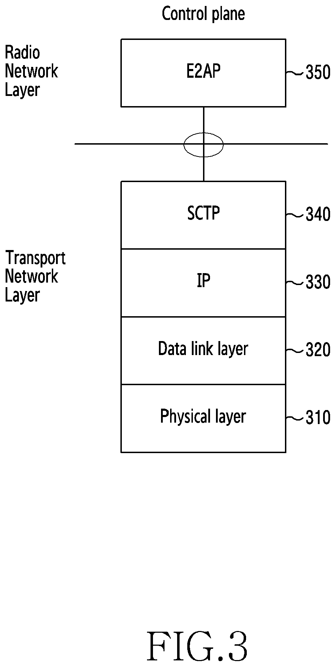

FIG. 3 illustrates a protocol stack of an E2 application protocol message in a radio access network according to various embodiments of the present disclosure. Referring to FIG. 3, a control plane includes a transport network layer and a radio network layer. The transport network layer includes a physical layer 310, a data link layer 320, an IP 330, and a stream control transmission protocol (SCTP) 340.

The radio network layer includes an E2AP 350. The E2AP 350 is used to deliver a subscription message, an indication message, a control message, a service update message, and a service query message, and is transmitted in a higher layer of the SCTP 340 and the IP 330.

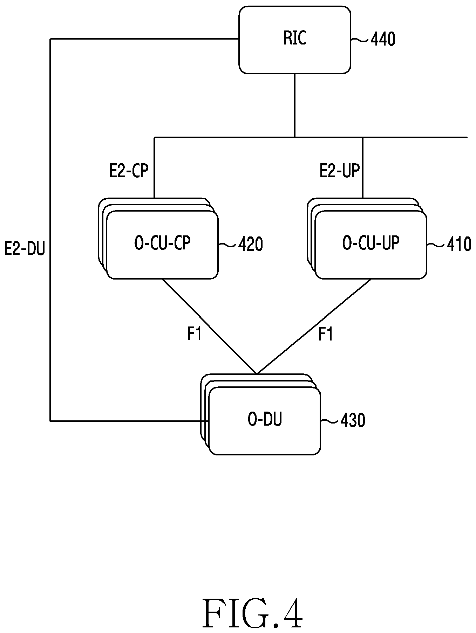

FIG. 4 illustrates an example of a connection between a base station and an RIC in a radio access network according to various embodiments of the present disclosure.

Referring to FIG. 4, an RIC 440 is connected to an O-CU-CP 420, an O-CU-UP 410, and an O-DU 430. The RIC 440 is a device for customizing RAN functionality for a new service or reginal resource optimization. The RIC 440 may provide functions such as network intelligence (e.g., policy enforcement, handover optimization), resource assurance (e.g., radio-link management, advanced self-organized-network (SON)), resource control (e.g., load balancing, slicing policy). The RIC 440 may communicate with the O-CU-CP 420, the O-CU-UP 410, and the O-DU 430. The RIC 440 may be connected to each node through E2-CP, E2-UP, and E2-DU interfaces. In addition, the interface between the O-CU-CP and the DU and between the O-CU-UP and the DU may be referred to as an F1 interface. In the following description, the DU and the O-DU, the CU-CP and the O-CU-CP, and the CU-UP and the O-CU-UP may be used interchangeably.

While FIG. 4 illustrates one RIC 440, a plurality of RICs may exist, according to various embodiments. The plurality of the RICs may be implemented with a plurality of hardware located at the same physical location or may be implemented through virtualization using single hardware.

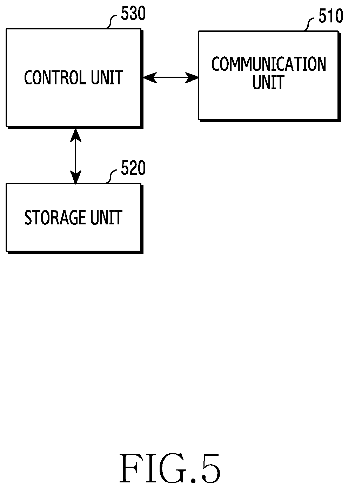

FIG. 5 illustrates a configuration of a device according to various embodiments of the present disclosure. The structure illustrated in FIG. 5 may be understood as a configuration of a device having at least one function of the RIC, the O-CU-CP, the O-CU-UP, and the O-DU of FIG. 5. A term such as '...unit' or '...er' used hereafter indicates a unit for processing at least one function or operation, and may be implemented using hardware, software, or a combination of hardware and software.

Referring to FIG. 5, a core network device includes a communication unit 510, a storage unit 520, and a control unit 530.

The communication unit 510 provides an interface for performing communication with other devices in the network. That is, the communication unit 510 converts a bit string transmitted from the core network device to other device into a physical signal, and converts a physical signal received from other device into a bit string. That is, the communication unit 510 may transmit and receive signals. Accordingly, the communication unit 510 may be referred to as a modem, a transmitter, a receiver, or a transceiver. In this case, the communication unit 510 enables the core network device to communicate with other devices or systems via a backhaul connection (e.g., wired backhaul or wireless backhaul) or over the network.

The storage unit 520 stores data such as a basic program, an application program, and setting information for the operations of the core network device. The storage unit 520 may include a volatile memory, a nonvolatile memory, or a combination of a volatile memory and a nonvolatile memory. The storage unit 520 provides the stored data according to a request of the control unit 530.

The control unit 530 controls general operations of the core network device. For example, the control unit 530 transmits and receives signals through the communication unit 510. In addition, the control unit 530 records and reads data in and from the storage unit 520. For doing so, the control unit 530 may include at least one processor. According to various embodiments, the control unit 530 may control the device to carry out operations according to various embodiments explained in the present disclosure.

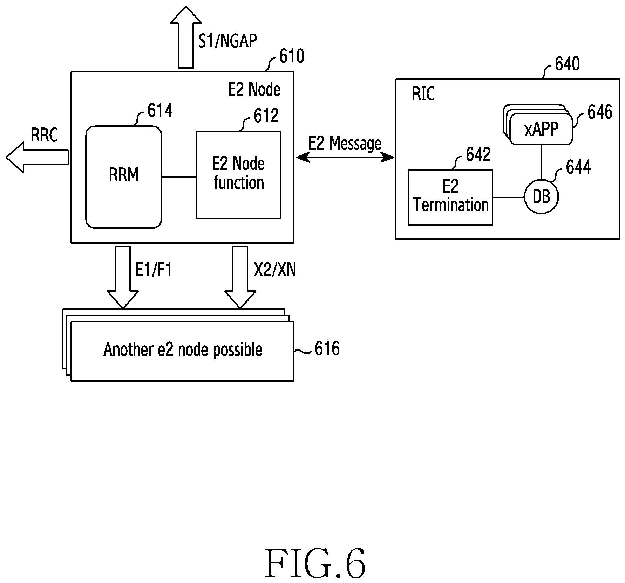

FIG. 6 illustrates logical functions related to E2 messages of an E2 node and an RIC in a radio access network according to various embodiments of the present disclosure.

Referring to FIG. 6, an RIC 640 and an E2 node 610 may transmit or receive an E2 message with each other. For example, the E2 node 610 may be an O-CU-CP, an O-CU-UP, an O-DU, or a base station. A communication interface of the E2 node may be determined according to the type of the E2 node 610. For example, the E2 node 610 may communicate with another E2 node 616 through the E1 interface or the F1 interface. Alternatively, for example, the E2 node 610 may communicate with the E2 node 616 through an X2 interface or an XN interface. Alternatively, for example, the E2 node 610 may perform communication through an S1 interface or a next generation application protocol (NGAP) interface (i.e., an interface between a next generation (NG) RAN node and an AMF).

The E2 node 610 may include an E2 node function 612. The E2 node function 612 is a function corresponding to a specific xApp (application S/W) 646 installed in the RIC 640. For example, in the KPI monitor, KPI monitor collection S/W may be installed in the RIC 640, and the E2 node 610 may include the E2 node function 612 which generates KPI parameters, and then forwards an E2 message including the KPI parameters to an E2 termination 642 positioned at the RIC 640. The E2 node 610 may include a radio resource management (RRM) 614. The E2 node 610 may manage resources provided to the radio network for the terminal.

The E2 termination 624 positioned in the RIC 640, which is a termination of the RIC 640 for the E2 message, may perform a function of interpreting the E2 message forwarded by the E2 node 610 and then forwarding it to the xApp 646. A database (DB) 644 positioned in the RIC 640 may be used for the E2 termination 624 or the xApp 616. The E2 node 610 shown in FIG. 6 is a termination of at least one interface, and may be understood as a termination of messages transmitted to a terminal, a neighbor base station, and a core network.

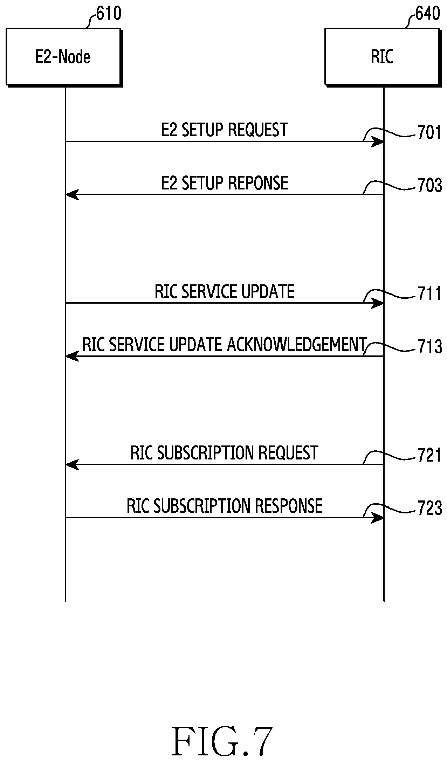

FIG. 7 illustrates an example of a signaling procedure between an E2 node and an RIC according to embodiments of the present disclosure. Specifically, FIG. 7 shows the example of an initial set up procedure until the RIC is available for service, as being discussed in the O-RAN standard. FIG. 7 illustrates an E2 I/F setup procedure, an E2 service update procedure and an RIC subscription message delivery procedure between the E2 node and the RIC.

Referring to FIG. 7, the E2 node 610 may transmit an E2 SETUP REQUEST message to the RIC 640 in step 701. An E2 NODE FUNCTION positioned in the E2 node 610 may find the RIC using the IP address of the RIC 640 which is set to operations-administration-management (OAM) and transmit the E2 SETUP REQUEST message. The E2 SETUP REQUEST message may include RAN function information (e.g., RAN function definition) supported by the E2 node 610, E2 node ID information, and so on. A RAN function definition value is a value set to the OAM. For example, the RAN function definition value may include a STYLE ID value. By receiving information of the set value with the OAM, the RIC 640 may determine which call processing function the E2 node 610 supports based on the RAN function definition value.

In step 703, the RIC 640 may receive an E2 SETUP RESPONSE message from the E2 node 610. The RIC 640 may determine whether to accept the E2 SETUP REQUEST message transmitted by the E2 node 640. If accepting the E2 SETUP REQUEST message, the RIC 640 may transmit the E2 SETUP RESPONSE message to the E2 node 610.

In step 711, the E2 node 610 may transmit an E2 SERVICE UPDATE message to the RIC 640. The E2 node 610 may write E2 node supportable function capability with E2 FUNCTION ID. The E2 node 610 may write the E2 FUNCTION ID in RIC SERVICE UPDATE ID in the form of a list, and transmit it in the E2 SERVICE UPDATE to the RIC. In step 913, the RIC 640 may transmit an RIC SERVICE UPDATE ACKNOWLEDGE message to the E2 node 610. If accepting E2 NODE FUNCTION ID value(s) of the E2 SERVICE UPDATE message transmitted by the E2 node 610, the RIC 640 may transmit the E2 SERVICE UPDATE ACKNOWLEDGEMENT message.

In step 721, the RIC 640 may transmit an RIC SUBSCRIPTION REQUEST message to the E2 node. A specific xApp positioned in the RIC 610 requests the subscription to a specific RAN function definition function supported by the E2 from the RIC E2 termination function. According to an embodiment, the transmission of the subscription request message and the E2 SETUP RESPONSE message may be transmitted separately, as shown in FIG. 7. According to another embodiment, the subscription request message of step 705 may be included in the E2 SETUP RESPONSE message of step 703 and transmitted together.

In step 723, the E2 node 610 may transmit an RIC SUBSCRIPTION RESPONSE to the RIC 640. The E2 node function of the E2 node 610 may decode the SUBSCRIPTION REQUEST message. After successfully setting an event condition requested by the RIC 640 from the E2 node function, the E2 node function of the E2 node 610 may communicate to the RIC 640 that the event trigger condition has been successfully set through the subscription response.

In FIG. 7, the set up procedure, the RIC service update procedure, and the RIC subscription procedure are sequentially described, but embodiments of the present disclosure are not limited to the above-described order and procedures. That is, in some embodiments, the E2 node and the RIC may independently perform the E2 setup procedure of step 701 through step 703. In some embodiments, the E2 node and the RIC may independently perform the service update procedure of step 711 through step 713. Meanwhile, according to another embodiment, as described above, the E2 SETUP RESPONSE message may include the subscription request message. Also, according to another embodiment, the E2 node and the RIC may independently perform the RIC indication procedure, which is not shown in FIG. 7. In addition, according to another embodiment, the E2 node and the RIC may independently perform the RIC control procedure of step 711, which is not shown in FIG. 7. Besides, the E2 node and the RIC may perform at least some of the above-described procedures together or separately.

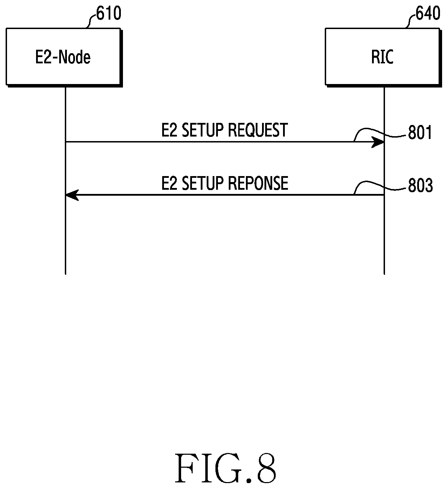

FIG. 8 illustrates an example of a setup procedure between an E2 node and an RIC according to embodiments of the present disclosure. Specifically, FIG. 8 illustrates the example of the E2 setup procedure suggested in the present disclosure.

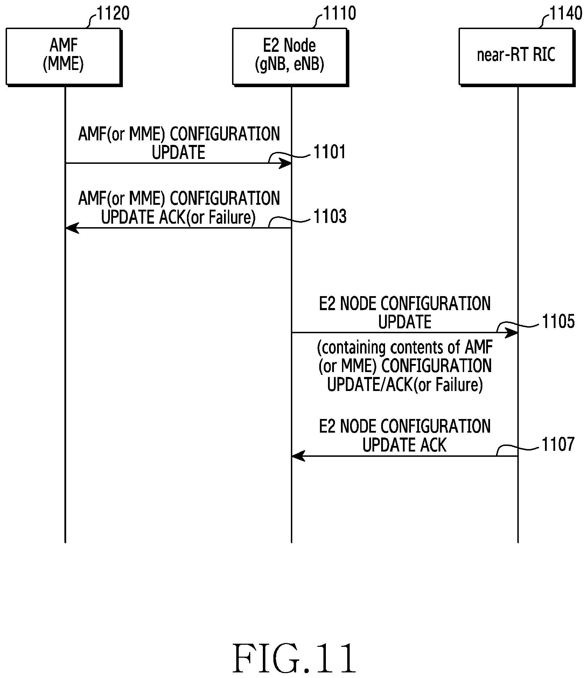

Referring to FIG. 8, in step 801, the E2 node 610 may transmit an E2 SETUP REQUEST message to the RIC 640. The E2 node 610 may find the RIC using the RIC IP address set to the OAM and transmits the E2 SET UP REQUEST message to establish E2 connection with the RIC. According to an embodiment, the E2 node 610 may transmit an NG SETUP REQUEST/S1 SETUP REQUEST message defined in the 3GPP standard and a plurality of NG SETUP RESPONSE/S2 SETUP RESPONSE messages received from a plurality of AMFs/MMEs connected with the E2 node 610 through the E2 SETUP REQUEST message. Details of the message are described in FIG. 11.

In step 803, the RIC 640 may transmit an E2 SETUP RESPONSE message to the E2 node 610. The RIC E2 termination function establishes the E2 connection if the E2 SETUP REQUEST message is an intact message. The RIC 640 may extract and obtain the NG SETUP REQUEST/S 1 SETUP REQUEST message and the plurality of NG SETUP RESPONSE/S2 SETUP RESPONSE messages received from the plurality of the AMFs/MMEs connected with the E2 node through the E2 SETUP REQUEST message received from the E2 node 610. The RIC 640 may store the corresponding acquired information in the DB, and then generate the E2 SETUP RESPONSE message and transmit the E2 SETUP RESPONSE to the E2 node 610. The plurality of the NG SETUP RESPONSE messages according to the NG SETUP REQUEST or the plurality of the S 1 SETUP RESPONSE messages according to the S1 SETUP REQUEST have been described by way of example, but the embodiments of the present disclosure may use request/response messages of other various procedures than the NG SETUP procedure or the S 1 SETUP procedure. According to an embodiment, the E2 SET UP REQUEST message transmitted by the E2 node 610 may include an XN SETUP REQUEST/X2 SETUP REQUEST message defined in the 3GPP standard or a plurality of XN SETUP RESPONSE/X2 SETUP RESPONSE messages received from a plurality of E2 nodes connected with the E2 node.

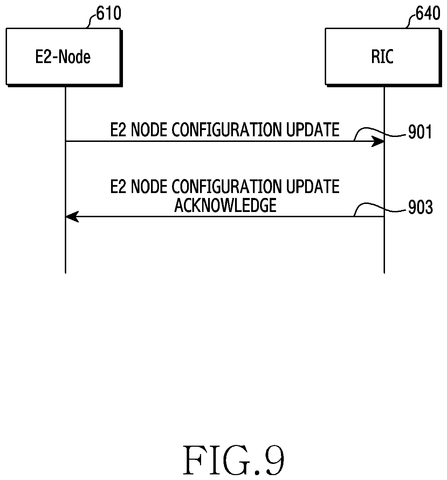

FIG. 9 illustrates an example of a E2 NODE CONFIGURATION UPDATE procedure between an E2 node and an RIC according to embodiments of the present disclosure. In FIG. 9, the example of the E2 NODE CONFIGURATION UPDATE procedure suggested by embodiments of the present disclosure is described.

Referring to FIG. 9, in step 901, the E2 node 610 may transmit the E2 NODE CONFIGURATION UPDATE message to the RIC 640. The E2 node 610 may transmit RAN configuration changes in the E2 NODE CONFIGURATION UPDATE message. The E2 node 610 may forward AMF/MME related information update to the RIC 640 by including an RAN CONFIGURATION UPDATE/ENB CONFIGURATION UPDATE message defined in the 3GPP standard and a plurality of RAN CONFIGURATION UPDATE ACKNOWLEDGE/ENB CONFIGURATION UPDATE ACKNOWLEDGE messages received from a plurality of AMF/MMEs connected with the E2 node into the E2 NODE CONFIGURATION UPDATE message. Also, according to an embodiment, for neighbor E2 node related information update, the E2 node 610 may include NG-RAN NODE CONFIGURATION UPDATE/ENB CONFIGURATION UPDATE defined in the 3GPP and a plurality of RAN CONFIGURATION UPDATE ACKNOWLEDGE/ENB CONFIGURATION UPDATE ACKNOWLEDGE messages received from a plurality of E2 nodes (O-CU-CP/O-eNB) connected with the E2 node (O-CU-CP/O-eNB) into the E2 NODE CONFIGURATION UPDATE message and forward it to the RIC 640.

In step 903, the RIC 640 may transmit an E2 NODE CONFIGURATION UPDATE ACKNOWLEDGE message to the E2 node 610. The RIC E2 termination function may update the corresponding configuration, if the E2 NODE CONFIGURATION UPDATE message is an intact message. The RIC 640 may extract and obtain the RAN CONFIGURATION UPDATE/ENB CONFIGURATION UPDATE message and the plurality of the RAN CONFIGURATION UPDATE ACKNOWLEDGE/ENB CONFIGURATION UPDATE ACKNOWLEDGE messages received from the plurality of AMF/MME/O-CU-CPs connected with the E2, through the E2 NODE CONFIGURATION UPDATE message received from the E2 node 610. The RIC 640 may store the acquired corresponding information in the DB. The RIC 640 may generate the E2 NODE CONFIGURATION UPDATE ACKNOWLEDGEMENT message based on the acquired corresponding information, and transmit the generated E2 NODE CONFIGURATION UPDATE ACKNOWLEDGEMENT message to the E2 node 610.

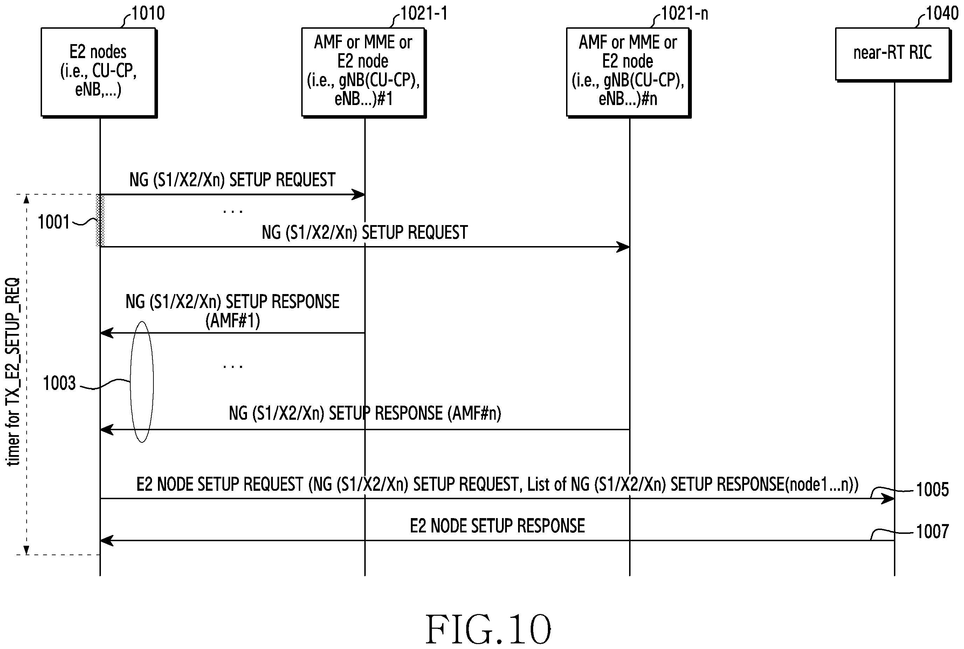

FIG. 10 illustrates an example of signaling between an E2 node, network nodes, and an RIC according to embodiments of the present disclosure. FIG. 10 illustrates the example of the SETUP procedure defined by the 3GPP between multi AMF/MME/E2 nodes and the E2 node suggested in the present disclosure.

Referring to FIG. 10, an E2 node 1010 may be a node related to the base station, such as an eNB, a gNB, an O-CU-CP, an O-CU-UP, an O-DU. A network node 1021-i may be a network entity connected to the E2 node 1010. The network node 1021-i may be one of network entities of the core network such as an AMF and an MME, as well as the E2 node such as an eNB, a gNB, an O-CU-CP, an O-CU-UP, an O-DU. A plurality of network nodes may be associated in response to one E2 node 1010. According to an embodiment, for the efficient mobility management, a plurality of AMFs may exist for the gNB. While request message/response message between the E2 node 1010 and the network node 1021-i are described by way of example, it is noted that other messages may be operated in the identical or similar manner to the embodiments of the present disclosure.

The E2 node 1010 may perform the SETUP procedure defined by the 3GPP with a plurality of network nodes 1021-1 through 1021-n (e.g., AMF/MME/E2 nodes). In step 1001, the E2 node 1010 may transmit a setup request message to each of the network nodes 1021-1 through 1021-n. For example, if the E2 node 1010 is a gNB and the network node 1021-i is an AMF, the setup request message may be an NG SETUP REQUEST message.

In step 1003, the E2 node 1010 may receive setup response messages from the plurality of the network nodes 1021-1 through 1021-n. In response to the request message received from the E2 node 1010, each network node may generate the response, and transmit the generated response message. For example, if the E2 node 1010 is the gNB and the network node 1021-i is the AMF, the setup response message may be an NG SETUP RESPONSE message. In response to the same SETUP REQUEST message, the E2 node may receive several SETUP RESPONSE messages. The E2 node may receive corresponding SET UP RESPONSE messages from the network nodes respectively. If the E2 NODE SET UP REQUEST message is NGAP/S1AP/X2AP/XNAP, a plurality of RESPONSE messages corresponds to one REQUEST message.

In step 1005, the E2 node 1010 may transmit an E2 NODE SET UP REQUEST message to an RIC 1040. The description of step 701 of FIG. 7 or step 801 of FIG. 8 may be applied to step 1005 in the identical or similar manner. The E2 node may forward the plurality of the response messages to the RIC through the E2 NODE SET UP REQUEST message. Types of the request message and one or more response messages transmitted in the E2 NODE SET UP REQUEST are illustrated in detail in FIG. 11.

In step 1007, the E2 node 1010 may receive an E2 NODE SET UP RESPONSE message from the RIC 1040. The description of step 703 of FIG. 7 or step 803 of FIG. 8 may be applied to step 1007 in the identical or similar manner.

FIG. 10 illustrates that the E2 node forwards to the RIC the set of the request message and one or more response messages through the E2 NODE SETUP procedure, but the embodiments of the present disclosure are not limited thereto. According to an embodiment, the E2 node may forward the set of the request message and one or more response messages to the RIC, through the E2 NODE CONFIGURATION UPDATE procedure. In this case, the signaling procedures shown in FIG. 9 may be used.

FIG. 11 illustrates an example of a CONFIGURATION UPDATE procedure between a core network entity and an RIC according to embodiments of the present disclosure. As the core network entity, an AMF or an MME which manages the mobility of the UE is described as the embodiment. In the 5GC, the core network entity may be the AMF. In the LTE core network, the core network entity may be the MME. Meanwhile, it is noted that other core network entity than the AMF and the MME may be used as the embodiment of the present disclosure. FIG. 11 illustrates signal flows of transmitting an AMF (MME) CONFIGURATION UPDATE message and an AMF (MME) CONFIGURATION UPDATE ACK (failure) message suggested in the present disclosure in an E2 NODE CONFIGURATION UPDATE message.

Referring to FIG. 11, in step 1101, an AMF 1120 may transmit an AMF CONFIGURATION UPDATE message to an E2 node 1110. If the core network entity is the MME, the corresponding message may be an MME CONFIGURATION UPDATE message. The AMF CONFIGURATION UPDATE message may be transmitted, if the AMF changes configuration information. The AMF may transmit the AMF CONFIGURATION UPDATE message to the E2 node (e.g., an O-CU-CP). If at least one of AMF information (name), GUAMI list, PLMN support list (slice), relative AMF capacity, and AMF TNL association list is changed, the AMF 1120 may transmit the AMF CONFIGURATION UPDATE message to the E2 node 1110.

In step 1103, the E2 node 1110 may transmit an AMF CONFIGURATION UPDATE ACKNOWLEDGE message to the AMF 1120. If the core network entity is the MME, the corresponding message may be an MME CONFIGURATION UPDATE ACKNOWLEDGE message. Unlike FIG. 11, for failure, the corresponding message may indicate FAILURE.

In step 1105, the E2 node 1110 may transmit an E2 NODE CONFIGURATION UPDATE message to the AMF 1120. The description of step 901 of FIG. 9 may be applied to the E2 NODE CONFIGURATION UPDATE message in the identical or similar manner.

In step 1107, the AMF 1120 may transmit an E2 NODE CONFIGURATION UPDATE ACKNOWLEDGE message to the E2 node 1110. The description of step 903 of FIG. 10 may be applied to the E2 NODE CONFIGURATION UPDATE message in the identical or similar manner.

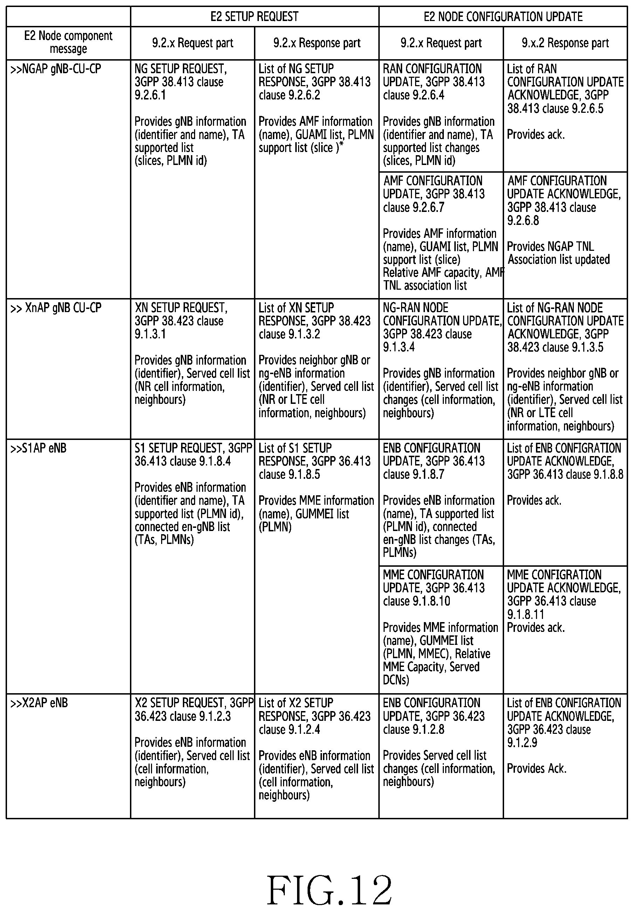

FIG. 12 is a diagram summarizing a request part and a message part between an E2 node and an RIC according to embodiments of the present disclosure. In FIG. 12, message formats suggested in the present disclosure are added, to an information elements (IE) of the E2 SETUP/E2 NODE CONFIGURATION UPDATE message defined in the O-RAN standard.

**[Table 1]**

| | E2 SETUP REQUEST | | E2 NODE CONFIGURATION UPDATE | |
|---|---|---|---|---|
| E2 Node component message | 9.2.x Request part | 9.2.x Response part | 9.2.x Request part | 9.x.2 Response part |
| >>NGAP gNB-CU-CP | NG SETUP REQUEST, 3GPP 38.413 clause 9.2.6.1 | List of NG SETUP RESPONSE, 3GPP 38.413 clause 9.2.6.2 | RAN CONFIGURATION UPDATE, 3GPP 38.413 clause 9.2.6.4 | List of RAN CONFIGURATION UPDATE ACKNOWLEDGE, 3GPP 38.413 clause9.2.6.5 |
| | Provides gNB information (identifier and name), TA supported list (slices, PLMN id) | Provides AMF information (name), GUAMI list, PLMN support list (slice )* | Provides gNB information (identifier and name), TA supported list changes (slices, PLMN id) | Provides ack. |
| | | | AMF CONFIGURATION UPDATE, 3GPP 38.413 clause 9.2.6.7 | AMF CONFIGURATION UPDATE ACKNOWLEDGE, 3GPP 38.413 clause 9.2.6.8 |
| | | | Provides AMF information (name), GUAMI list, PLMN support list (slice) Relative AMF capacity, AMF TNL association list | Provides NGAP TNL Association list updated |
| >> XnAP gNB CU-CP | XN SETUP REQUEST, 3GPP 38.423 clause 9.1.3.1 | List of XN SETUP RESPONSE, 3GPP 38.423 clause 9.1.3.2 | NG-RAN NODE CONFIGURATION UPDATE, 3GPP 38.423 clause 9.1.3.4 | List of NG-RAN NODE CONFIGURATION UPDATE ACKNOWLEDGE, 3GPP 38.423 clause9.1.3.5 |
| | Provides gNB information (identifier), Served cell list (NR cell information, neighbours) | Provides neighbor gNB or ng-eNB information (identifier), Served cell list (NR or LTE cell information, neighbours) | Provides gNB information (identifier), Served cell list changes (cell information, neighbours) | Provides neighbor gNB or ng-eNB information (identifier), Served cell list (NR or LTE cell information, neighbours) |
| >>S1AP eNB | S1 SETUP REQUEST, 3GPP 36.413 clause 9.1.8.4 | List of S1 SETUP RESPONSE, 3GPP 36.413 clause 9.1.8.5 | ENB CONFIGURATION UPDATE, 3GPP 36.413 clause 9.1.8.7 | List of ENB CONFIGRATION UPDATE ACKNOWLEDGE, 3GPP 36.413 clause9.1.8.8 |
| | Provides eNB information (identifier and name), TA supported list (PLMN id), connected en-gNB list (TAs, PLMNs) | Provides MME information (name), GUMMEI list (PLMN) | Provides eNB information (name), TA supported list (PLMN id), connected en-gNB list changes (TAs, PLMNs) | Provides ack. |
| | | | MME CONFIGURATION UPDATE, 3GPP | MME CONFIGRATION UPDATE ACKNOWLEDGE, |
| | | | 36.413 clause 9.1.8.10 | 3GPP 36.413 clause 9.1.8.11 |
| | | | Provides MME information (name), GUMMEI list (PLMN, MMEC), Relative MME Capacity, Served DCNs) | Provides ack. |
| >>X2AP eNB | X2 SETUP REQUEST, 3GPP 36.423 clause 9.1.2.3 | List of X2 SETUP RESPONSE, 3GPP 36.423 clause 9.1.2.4 | ENB CONFIGURATION UPDATE, 3GPP 36.423 clause 9.1.2.8 | List of ENB CONFIGRATION UPDATE ACKNOWLEDGE, 3GPP 36.423 clause9.1.2.9 |
| | Provides eNB information (identifier), Served cell list (cell information, neighbours) | Provides eNB information (identifier), Served cell list (cell information, neighbours) | Provides Served cell list changes (cell information, neighbours) | Provides Ack. |

The first IE is the NGAP gNB-CU-CP message and is a message transmitted through the E2 SETUP REQUEST message, and an NG SETUP REQUEST and a plurality of corresponding NG SETUP RESPONSE messages may be defined. According to an embodiment, the response message part may be configured in the form of a list, to include the plurality of the response messages. The first IE is the NGAP gNB-CU-CP message, and the RAN CONFIGURATION UPDATE message and a plurality of corresponding RAN CONFIGURATION UPDATE ACKNOWLEDGE messages may be defined, for the E2 NODE CONFIGURATION UPDATE message. Besides, as mentioned in FIG. 11, the AMF CONFIGURATION UPDATE initiated by the AMF (hereafter, AMF-initiated) and its response message AMF CONFIGURATION UPDATE ACKNOWLEDGE message may be included in the E2 NODE CONFIGURATION UPDATE message.

The second IE is the XnAP gNB-CU-CP message and is a message transmitted through the E2 SETUP REQUEST message, and an XN SETUP REQUEST and a plurality of corresponding XN SETUP RESPONSE messages may be defined. According to an embodiment, the response message part may be configured in the form of a list, to include the plurality of the response messages. The second IE is the XnAP gNB-CU-CP message and is a message transmitted through the E2 NODE CONFIGURATION UPDATE message, and the NG-RAN NODE CONFIGURATION UPDATE message and a plurality of corresponding NG-RAN NODE CONFIGURATION UPDATE ACKNOWLEDGE messages may be defined.

The third IE is the SlAP eNB message and is a message transmitted through the E2 SETUP REQUEST message, and an S1 SETUP REQUEST and a plurality of corresponding S1 SETUP RESPONSE messages may be defined. According to an embodiment, the response message part may be configured in the form of a list, to include the plurality of the response messages. The third IE is the S1AP eNB message and is a message transmitted through the E2 NODE CONFIGURATION UPDATE message, and the ENB CONFIGURATION UPDATE message and a plurality of corresponding ENB CONFIGURATION UPDATE ACKNOWLEDGE messages may be defined. Besides, as mentioned in FIG. 11, the MME CONFIGURATION UPDATE initiated by the MME (hereafter, MME-initiated) and its response message MME CONFIGURATION UPDATE ACKNOWLEDGE message may be included in the E2 NODE CONFIGURATION UPDATE message.

The fourth IE is the X2AP eNB message and is a message transmitted through the E2 SETUP REQUEST message, and an X2 SETUP REQUEST and a plurality of corresponding X2 SETUP RESPONSE messages may be defined. According to an embodiment, the response message part may be configured in the form of a list, to include the plurality of the response messages. The fourth IE is the X2AP eNB message and is a message transmitted through the E2 NODE CONFIGURATION UPDATE message, and the ENB CONFIGURATION UPDATE message and a plurality of corresponding ENB CONFIGURATION UPDATE ACKNOWLEDGE messages may be defined.

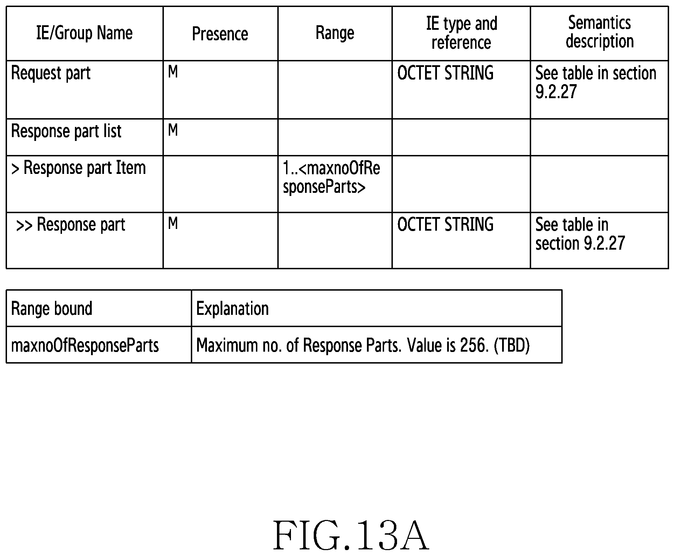

FIGS. 13A through 13C illustrate IE examples of an E2 SETUP message.

Referring to FIG. 13A, the message format shown in FIG. 13A may be used, as the IE of the E2 SETUP/E2 NODE CONFIGURATION UPDATE message defined in the O-RAN standard. The message may largely include two parts. The message may include a request part and a response part. The request part may include a request message (e.g., NG SETUP REQUEST). The response part may include at least one response message (e.g., NG SETUP RESPONSE). According to an embodiment, the response part may be configured in the list form to accept a plurality of response messages. The E2 SETUP REQUEST message or the E2 NODE CONFIGURATION UPDATE message may include the IE of the response part list. For example, the list may be generated as a list of encoding up to 256 response messages, for one request message (e.g., NG SETUP REQUEST).

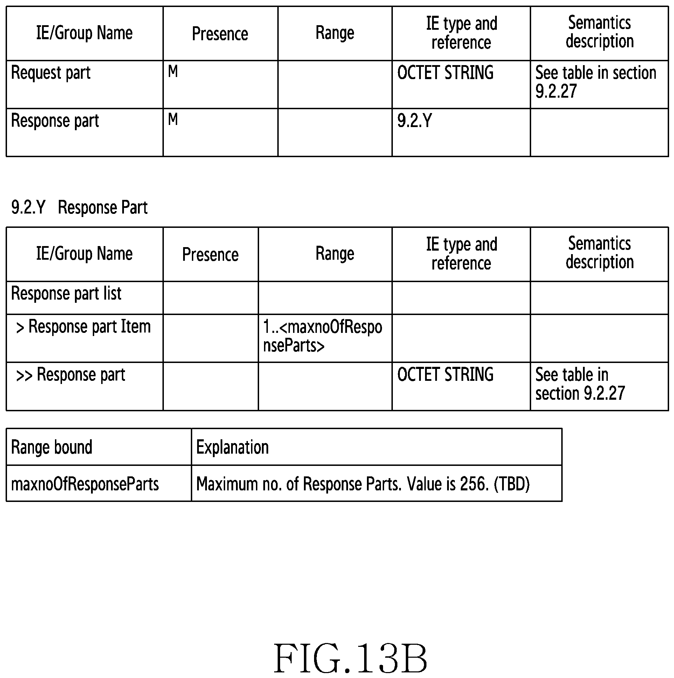

Referring to FIG. 13B, the message format shown in FIG. 13B may be used, as the E2 SETUP/E2 NODE CONFIGURATION UPDATE message defined in the O-RAN standard. The message may largely include two parts. The message may include the request part and the response part. The request part may include a request message (e.g., NG SETUP REQUEST). The response part is a separate IE and may be represented to refer to other part. The response part may include at least one response message (e.g., NG SETUP RESPONSE). According to an embodiment, the response part may be configured in the list form to accept a plurality of response messages. The IE of the E2 SETUP REQUEST message or the E2 NODE CONFIGURATION UPDATE message may be configured to refer to (e.g., 9.2.Y clause) the response part IE.

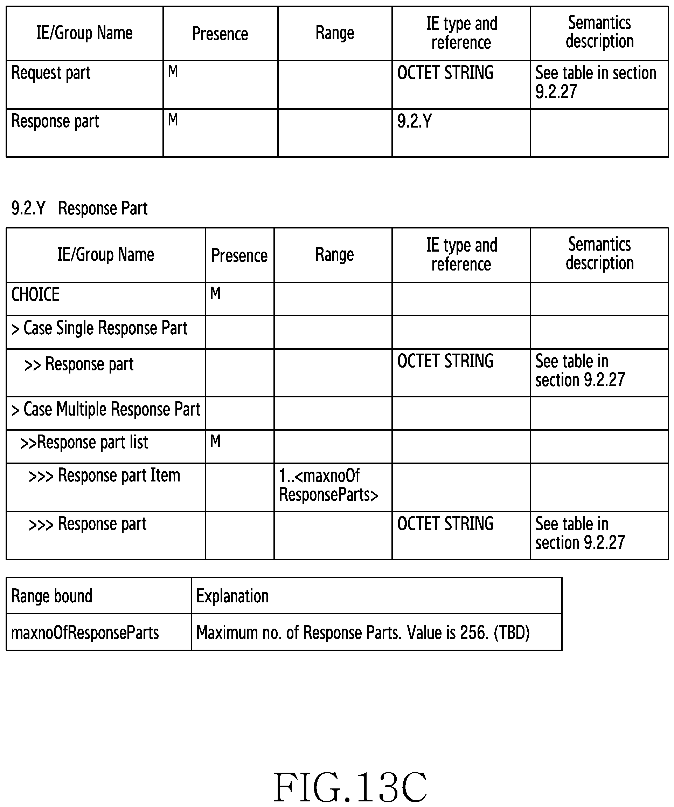

Referring to FIG. 13C, the message format shown in FIG. 13C may be used, as the IE of the E2 SETUP/E2 NODE CONFIGURATION UPDATE message defined in the O-RAN standard. The message may largely include two parts. The message may include the request part and the response part. The request part may include a request message (e.g., NG SETUP REQUEST). The response part may include at least one response message (e.g., NG SETUP RESPONSE). According to an embodiment, the response part may have a CHOICE format to select the type depending on whether to include a single response message or to include multiple response messages. That is, the response part may be configured in the CHOICE manner, and encoded to encode and select one of the single response and the multiple responses. If one response message corresponds to the request message, the E2 node may forward the response message (e.g., NG SETUP RESPONSE) to the RIC through `Case Single Response Part'. If multiple (i.e., two or more) response messages correspond to the request message, the E2 node may forward two or more response messages (e.g., NG SETUP RESPONSE) to the RIC through `Case Single Response Part'. In this case, the list form may be configured to accept the multiple response messages. Section 9.2.27 referred to in FIG. 13A through FIG. 13C may refer to the table shown in FIG. 12.

According to the embodiments stated above, the E2 setup procedure for the E2 SETUP operation of the RIC and the RAN setup procedure at the E2 node may be carried out, by forwarding a plurality of messages to the near-RT RIC in the 3GPP message format.

The E2 SETUP message or the E2 CONFIGURATION UPDATE message through various embodiments of the present disclosure may efficiently provide the response messages to the RIC, even if the E2 node configuration information supported by the O-RAN standard exists in each of a plurality of MME/AMF/E2 nodes.

While the present disclosure describes the IE of the list type to accept the multiple response messages by way of example, which is a merely an example to explain the reason for adopting the IE of the list type, the list does not necessarily include multiple response messages. That is, the IE configured in the list form including one response message corresponding to one request message in the list and corresponding to the E2 NODE SETUP REQUEST or the E2 NODE CONFIGURATION UPDATE may be also understood as the embodiment of the present disclosure.

The configuration update (e.g., MME CONFIGURATION UPDATE or AMF CONFIGURATION UPDATE) of the core network entity delivered through the E2 NODE CONFIGURATION UPDATE may be summarized as follows.

**[Table 2]**

| | E2 SETUP REQUEST | | E2 NODE CONFIGURATION UPDATE | |
|---|---|---|---|---|
| E2 Node component message | 9.2.x Request part | 9.2.x Response part | 9.2.x Request part | 9.x.2 Response part |
| >>NGAP gNB-CU-CP | NG SETUP REQUEST, 3GPP 38.413 clause 9.2.6.1 | List of NG SETUP RESPONSE, 3GPP 38.413 clause 9.2.6.2 | RAN CONFIGURATION UPDATE, 3GPP 38.413 clause 9.2.6.4 | List of RAN CONFIGURATION UPDATE ACKNOWLEDGE, |
| | Provides gNB information (identifier and name), TA supported list (slices, PLMN id) | Provides AMF information (name), GUAMI list, PLMN support list (slice )*, Relative AMF Capacity, AMF TNL association list | Provides gNB information (identifier and name), TA supported list changes (slices, PLMN id) | 3GPP 38.413 clause 9.2.6.5 |
| | | | | Provides ack. |
| | | | AMF CONFIGURATION UPDATE, 3GPP 38.413 clause 9.2.6.7 | AMF CONFIGURATION UPDATE ACKNOWLEDGE, 3GPP 38.413 clause 9.2.6.8 |
| | | | Provides AMF information (name), GUAMI list, PLMN support list (slice) Relative AMF capacity, AMF TNL association list | Provides NGAP TNL Association list updated |
| >>S1AP eNB | S1 SETUP REQUEST, 3GPP 36.413 clause 9.1.8.4 | List of S1 SETUP RESPONSE, 3GPP 36.413 clause 9.1.8.5 | ENB CONFIGURATION UPDATE, 3GPP 36.413 clause 9.1.8.7 | List of ENB CONFIGRATION UPDATE ACKNOWLEDGE, 3GPP 36.413 clause 9.1.8.8 |
| | Provides eNB information (identifier and name), TA supported list (PLMN id), connected en-gNB list (TAs, PLMNs) | Provides MME information (name), GUMMEI list (PLMN, MMEC), Relative MME Capacity, Served DCNs | Provides eNB information (name), TA supported list (PLMN id), connected en-gNB list changes (TAs, PLMNs) | Provides ack. |
| | | | MME CONFIGURATION UPDATE, 3GPP 36.413 clause 9.1.8.10 | MME CONFIGRATION UPDATE ACKNOWLEDGE, 3GPP 36.413 clause 9.1.8.11 |
| | | | Provides MME information (name), GUMMEI list (PLMN, MMEC), Relative MME Capacity, Served DCNs) | Provides ack. |

In an embodiment of the present disclosure, a method performed by an E2 node, the method comprising: receiving, from a network entity, request message; transmitting, to the network entity, a response message; transmitting, to near-real time (RT) radio access network (RAN) intelligent controller (RIC), first message including E2 node component configuration; and receiving, from the near-RT RIC, second message corresponding to the first message, wherein the E2 node component configuration includes a request part corresponding to the request message and a response part corresponding to the response message, and wherein, in case of NG interface, the request part includes access and mobility management function (AMF) configuration update message and the response part includes AMF configuration update acknowledge message.

In an embodiment, wherein the first message is a E2 node configuration update message; and wherein the second message is a E2 node configuration update acknowledge message.

In an embodiment, wherein the AMF configuration update message includes globally unique AMF identifier (GUAMI) list, public land mobile network (PLMN) support list, AMF transport network layer (TNL) association list, wherein the AMF configuration update acknowledge message includes updated AMF TNL association list.

In an embodiment, wherein, in case of S1 interface, the request part includes mobility management entity (MME) configuration update message and the response part includes MME configuration update acknowledge message.

In an embodiment, wherein the MME configuration update message includes globally unique MME identifier (ID) (GUMMEI) list, public land mobile network (PLMN) information, MME code (MMEC) information, and dedicated core network (DCN) information.

In an embodiment, wherein the E2 node includes O-RAN distributed unit, O-RAN central unit - control plane (O-CU-CP), O-RAN central unit - user plane (O-CU-UP), or O-RAN eNodeB (O-eNB).

In an embodiment of the present disclosure, a method performed by a near-real time (RT) radio access network (RAN) intelligent controller (RIC), the method comprising: receiving, from an E2 node, first message including E2 node component configuration; and transmitting, to the E2 node, second message corresponding to the first message, wherein the E2 node component configuration includes a request part from the network entity to the E2 node corresponding to the request message and a response part from the E2 node to the network entity corresponding to the response message, and wherein, in case of NG interface, the request part includes access and mobility management function (AMF) configuration update message and the response part includes AMF configuration update acknowledge message.

In an embodiment, wherein the first message is a E2 node configuration update message; and wherein the second message is a E2 node configuration update acknowledge message.

In an embodiment, wherein the AMF configuration update message includes globally unique AMF identifier (GUAMI) list, public land mobile network (PLMN) support list, AMF transport network layer (TNL) association list, wherein the AMF configuration update acknowledge message includes updated AMF TNL association list.

In an embodiment, wherein, in case of S1 interface, the request part includes mobility management entity (MME) configuration update message and the response part includes MME configuration update acknowledge message.

In an embodiment, wherein the MME configuration update message includes globally unique MME identifier (ID) (GUMMEI) list, public land mobile network (PLMN) information, MME code (MMEC) information, and dedicated core network (DCN) information.

In an embodiment, wherein the E2 node includes O-RAN distributed unit, O-RAN central unit - control plane (O-CU-CP), O-RAN central unit - user plane (O-CU-UP), or O-RAN eNodeB (O-eNB).

In an embodiment of the present disclosure, an apparatus for an E2 node, the apparatus comprising: at least one processor, at least one transceiver coupled with the at least one processor, wherein the at least one processor is configured to receive, from a network entity, request message; transmit, to the network entity, a response message; transmit, to near-real time (RT) radio access network (RAN) intelligent controller (RIC), first message including E2 node component configuration; and receive, from the near-RT RIC, second message corresponding to the first message, wherein the E2 node component configuration includes a request part corresponding to the request message and a response part corresponding to the response message, and wherein, in case of NG interface, the request part includes access and mobility management function (AMF) configuration update message and the response part includes AMF configuration update acknowledge message.

In an embodiment of the present disclosure, an apparatus for a near-real time (RT) radio access network (RAN) intelligent controller (RIC), the apparatus comprising: at least one processor, at least one transceiver coupled with the at least one processor, wherein the at least one processor is configured to receive, an E2 node, first message including E2 node component configuration; and transmit, to the E2 node, second message corresponding to the first message, wherein the E2 node component configuration includes a request part from a network entity to the E2 node corresponding to the request message and a response part from the E2 node to the network entity corresponding to the response message, and wherein, in case of NG interface, the request part includes access and mobility management function (AMF) configuration update message and the response part includes AMF configuration update acknowledge message.

In an embodiment of the present disclosure, a method performed by an E2 node, comprising: transmitting a request message to each of a plurality of network entities; receiving a plurality of response messages corresponding to the request message, from the plurality of the network entities; transmitting a first message comprising the request message and the plurality of the response messages to a radio access network (RAN) intelligent controller (RIC); and receiving a second response message corresponding to the first message, wherein the first message is an E2 SETUP REQUEST message or an E2 NODE CONFIGURATION UPDATE message, and the second message is an E2 SETUP RESPONSE message or an E2 NODE CONFIGURATION UPDATE ACKNOWLEDGE message.

In an embodiment, wherein the first message comprises an information element (IE) of a list type comprising the plurality of the response messages.

In an embodiment, wherein the request message is one of NG SETUP REQUEST, XN SETUP REQUEST, S1 SETUP RESPONSE, and X2 SETUP REQUEST, and the plurality of the response messages each are one of NG SETUP RESPONSE, XN SETUP RESPONSE, S 1 SETUP RESPONSE, and X2 SETUP RESPONSE.

In an embodiment, wherein the request message is one of RAN CONFIGURATION UPDATE, NG-RAN NODE CONFIGURATION UPDATE, and ENB CONFIGURATION UPDATE, and the plurality of the response messages each are one of RAN CONFIGURATION UPDATE ACKNOWLEDGE, NG-RAN NODE CONFIGURATION UPDATE ACKNOWLEDGE, and ENB CONFIGURATION UPDATE ACKNOWLEDGE.

In an embodiment, wherein the request message is one of AMF CONFIGURATION UPDATE and MME CONFIGURATION UPDATE, and the plurality of the response messages each are one of AMF CONFIGURATION UPDATE ACKNOWLEDGE and MME CONFIGURATION UPDATE ACKNOWLEDGE.

The methods according to the embodiments described in the claims or the specification of the present disclosure may be implemented in software, hardware, or a combination of hardware and software.

As for the software, a computer-readable storage medium storing one or more programs (software modules) may be provided. One or more programs stored in the computer-readable storage medium may be configured for execution by one or more processors of an electronic device. One or more programs may include instructions for controlling an electronic device to execute the methods according to the embodiments described in the claims or the specification of the present disclosure.

Such a program (software module, software) may be stored to a random access memory, a non-volatile memory including a flash memory, a read only memory (ROM), an electrically erasable programmable ROM (EEPROM), a magnetic disc storage device, a compact disc (CD)-ROM, digital versatile discs (DVDs) or other optical storage devices, and a magnetic cassette. Alternatively, it may be stored to a memory combining part or all of those recording media. A plurality of memories may be included.

Also, the program may be stored in an attachable storage device accessible via a communication network such as internet, intranet, local area network (LAN), wide area network (WAN), or storage area network (SAN), or a communication network by combining these networks. Such a storage device may access a device which executes an embodiment of the present disclosure through an external port. In addition, a separate storage device on the communication network may access the device which executes an embodiment of the present disclosure.

In the specific embodiments of the present disclosure, the components included in the present disclosure are expressed in a singular or plural form. However, the singular or plural expression is appropriately selected according to a proposed situation for the convenience of explanation, the present disclosure is not limited to a single component or a plurality of components, the components expressed in the plural form may be configured as a single component, and the components expressed in the singular form may be configured as a plurality of components.

Meanwhile, while the specific embodiment has been described in the detailed explanations of the present disclosure, it will be noted that various changes may be made therein without departing from the scope of the present disclosure.

## Claims

1. A method performed by an E2 node, the method comprising:
receiving, from a network entity, request message;
transmitting, to the network entity, a response message;
transmitting, to near-real time (RT) radio access network (RAN) intelligent controller (RIC), first message including E2 node component configuration; and
receiving, from the near-RT RIC, second message corresponding to the first message,
wherein the E2 node component configuration includes a request part corresponding to the request message and a response part corresponding to the response message, and
wherein, in case of NG interface, the request part includes access and mobility management function (AMF) configuration update message and the response part includes AMF configuration update acknowledge message.

2. The method of claim 1,
wherein the first message is a E2 node configuration update message; and
wherein the second message is a E2 node configuration update acknowledge message.

3. The method of claim 1,
wherein the AMF configuration update message includes globally unique AMF identifier (GUAMI) list, public land mobile network (PLMN) support list, AMF transport network layer (TNL) association list,
wherein the AMF configuration update acknowledge message includes updated AMF TNL association list.

4. The method of claim 1,
wherein, in case of S 1 interface, the request part includes mobility management entity (MME) configuration update message and the response part includes MME configuration update acknowledge message.

5. The method of claim 4,
wherein the MME configuration update message includes globally unique MME identifier (ID) (GUMMEI) list, public land mobile network (PLMN) information, MME code (MMEC) information, and dedicated core network (DCN) information.

6. The method of claim 1,
wherein the E2 node includes O-RAN distributed unit, O-RAN central unit - control plane (O-CU-CP), O-RAN central unit - user plane (O-CU-UP), or O-RAN eNodeB (O-eNB).

7. A method performed by a near-real time (RT) radio access network (RAN) intelligent controller (RIC), the method comprising:
receiving, from an E2 node, a first message including E2 node component configuration; and
transmitting, to the E2 node, a second message corresponding to the first message,
wherein the E2 node component configuration includes a request part from a network entity to the E2 node corresponding to the request message and a response part from the E2 node to the network entity corresponding to the response message, and
wherein, in case of NG interface, the request part includes access and mobility management function (AMF) configuration update message and the response part includes AMF configuration update acknowledge message.

8. The method of claim 7,
wherein the first message is a E2 node configuration update message; and
wherein the second message is a E2 node configuration update acknowledge message.

9. The method of claim 7,
wherein the AMF configuration update message includes globally unique AMF identifier (GUAMI) list, public land mobile network (PLMN) support list, AMF transport network layer (TNL) association list,
wherein the AMF configuration update acknowledge message includes updated AMF TNL association list.

10. The method of claim 7,
wherein, in case of S1 interface, the request part includes mobility management entity (MME) configuration update message and the response part includes MME configuration update acknowledge message.

11. The method of claim 10,
wherein the MME configuration update message includes globally unique MME identifier (ID) (GUMMEI) list, public land mobile network (PLMN) information, MME code (MMEC) information, and dedicated core network (DCN) information.

12. The method of claim 7,
wherein the E2 node includes O-RAN distributed unit, O-RAN central unit - control plane (O-CU-CP), O-RAN central unit - user plane (O-CU-UP), or O-RAN eNodeB (O-eNB).

13. An apparatus for an E2 node, the apparatus comprising:
at least one processor,
at least one transceiver coupled with the at least one processor,
wherein the at least one processor is configured to perform any of methods of claims 1 to 6.

14. An apparatus for a near-real time (RT) radio access network (RAN) intelligent controller (RIC), the apparatus comprising:
at least one processor,
at least one transceiver coupled with the at least one processor,
wherein the at least one processor is configured to perform any of methods of claims 7 to 12.
